Europäisches Patentamt

European Patent Office

Office européen des brevets

(19)

(11) Numéro de publication : **0 300 937 B1**

(12)

# FASCICULE DE BREVET EUROPEEN

(45) Date de publication du fascicule du brevet :
**13.11.91 Bulletin 91/46**

(51) Int. Cl.⁵ : **A01D 78/10**

(21) Numéro de dépôt : **88440054.0**

(22) Date de dépôt : **30.06.88**

(54) **Machine de fenaison munie de plusieurs roues râteleuses basculables en vue d'un repliement pour le transport ou le remisage.**

(30) Priorité : **15.07.87 FR 8710183**

(43) Date de publication de la demande :
**25.01.89 Bulletin 89/04**

(45) Mention de la délivrance du brevet :
**13.11.91 Bulletin 91/46**

(84) Etats contractants désignés :
**AT DE FR IT NL**

(56) Documents cités :
**EP-A- 0 165 638**
**EP-A- 0 203 023**
**EP-A- 0 288 416**
**DE-A- 1 782 632**
**DE-U- 8 602 563**
**DE-U- 8 625 784**

(56) Documents cités :
**DE-U- 8 709 233**
**DE-U- 8 712 441**
**DE-U- 8 715 674**
**FR-A- 1 346 993**
**GB-A- 2 057 239**
**US-A- 3 643 742**
**US-A- 4 615 397**

(73) Titulaire : **KUHN S.A.**
**4, Impasse des Fabriques**
**F-67700 Saverne (FR)**

(72) Inventeur : **Troesch, Martial M.**
**70a, rue de la Paix Schwenheim**
**F-67440 Marmoutier (FR)**

(74) Mandataire : **Andres, Jean-Claude**
**KUHN S.A. 4, Impasse des Fabriques**
**F-67700 Saverne (FR)**

EP 0 300 937 B1

Jouve, 18, rue Saint-Denis, 75001 PARIS

## Description

La présente invention concerne une machine de fenaison comportant notamment un châssis support de forme allongée qui porte plusieurs roues râteleuses pouvant être entraînées en rotation durant le travail autour d'axes dirigés vers le haut, ledit châssis se composant d'une partie centrale supportant des roues râteleuses centrales et de deux parties latérales supportant chacune au moins une roue râteleuse latérale. Lesdites parties latérales sont articulées à la partie centrale au moyen de pivots sensiblement parallèles au sens d'avancement de la machine, autour desquels elles peuvent pivoter en vue de suivre les inégalités du sol et peuvent être déplacées au moyen de dispositifs de manoeuvre en vue du transport ou du remisage, chacune de ces parties latérales comportant une articulation pour basculer la roue râteleuse latérale, cette articulation étant située entre le pivot correspondant et l'axe de rotation de la roue râteleuse latérale qui est la plus proche dudit pivot et des moyens de blocage de cette articulation lorsque les roues râteleuses sont dépliées en position de travail.

Une machine de ce genre, connue dans la demande de brevet EP-A-203023 comporte un châssis support de forme allongée, constitué d'une partie centrale et de deux parties latérales qui sont articulées aux extrémités de ladite partie centrale au moyen de pivots sensiblement horizontaux.

Cette partie centrale est elle-même constituée par deux longerons sensiblement parallèles et qui sont reliés entre eux au moyen de plaques. Au longeron supérieur est reliée une poutre de liaison qui s'étend sensiblement perpendiculairement au châssis et dont l'autre extrémité porte un chevalet d'attelage. Ce chevalet d'attelage est muni de trois points d'accouplement servant à fixer la machine au dispositif d'attelage trois points d'un tracteur d'entraînement.

La partie centrale du châssis peut porter deux roues râteleuses, tandis que chacune des parties latérales porte une roue râteleuse. Lesdites roues se situent directement sous la partie centrale et les parties latérales du châssis. Elles sont toutes sensiblement identiques. Chacune est constituée par un moyeu auquel sont fixés plusieurs bras portant des fourches de travail à leurs extrémités extérieures. Chaque moyeu est monté de manière à pouvoir tourner sur un axe fixe sensiblement vertical ou incliné dans la direction d'avancement de la machine. Ces axes sont reliés au châssis et portent à leurs extrémités inférieures des roulettes permettant de déplacer la machine sur le sol durant le travail.

Dans la position de travail, les quatre roues râteleuses sont sensiblement alignées. Elles sont entraînées en rotation d'une manière connue en soi à partir de l'arbre de prise de force du tracteur d'entraînement. A cet effet, des arbres d'entraînement munis de pignons qui coopèrent avec des couronnes dentées reliées au moyeux, sont logés dans les parties du châssis. Les roues râteleuses tournent alors deux par deux en convergence à l'avant — vu dans le sens d'avancement —. Par suite de cette rotation, leurs fourches déplacent le fourrage et assurent un fanage d'excellente qualité. Il est bien évident que des roues râteleuses destinées à effectuer des andains ou bien pouvant réaliser à la fois le fanage et l'andainage, peuvent être prévues sur cette machine.

Pour le transport ou le remisage, les parties extérieures du châssis peuvent être déplacées vers le haut d'un angle d'environ 90° autour des pivots en vue de réduire l'encombrement de la machine. Le déplacement de chacune de ces parties est avantageusement assuré au moyen d'un vérin hydraulique. Chaque vérin est articulé à la partie centrale du châssis au moyen d'un axe et à la partie latérale correspondante également au moyen d'un axe. L'actionnement de ces vérins se fait avantageusement à partir du tracteur. Ils peuvent être à double ou à simple effet. Dans ce dernier cas, le retour des parties latérales dans la position de travail se fait sous l'effet de leur propre poids. Les arbres d'entraînement des roues râteleuses extérieures comportent des articulations au niveau des pivots, de manière à pouvoir pivoter avec les parties latérales du châssis.

Dans la position de transport ou de remisage, la largeur de la machine est donc réduite par rapport à la position de travail. Toutefois, son encombrement est encore relativement important surtout pour les déplacements sur les routes ou pour le remisage. D'autre part, dans cette position relevée, les fourches de travail des roues râteleuses sont dirigées vers l'extérieur. Elles peuvent ainsi causer d'importants dégâts ou blessures à tout ce qui, comme par exemple des véhicules, des hommes ou des animaux, peut entrer en collision avec elles aussi bien lors des déplacements qu'à l'arrêt.

On a alors pensé à pourvoir chaque partie latérale du châssis de la machine d'un axe de pivotement permettant de modifier la position de la roue râteleuse qui est fixée à cette partie latérale lorsque celle-ci est déplacée autour du pivot la reliant à la partie centrale du châssis.

Ainsi, il est possible d'amener chaque roue râteleuse qui est rattachée à une partie latérale du châssis au-dessus de la partie centrale du châssis. Cette position est obtenue en faisant tourner ladite roue râteleuse d'un angle d'environ 180° autour de l'axe de pivotement précité.

Mais ce mode de réalisation, s'il permet d'atteindre le résultat souhaité, est relativement complexe et fait appel à de nombreuses pièces de guidage pour que ledit pivotement d'environ 180° s'effectue automatiquement lorsque les roues râteleuses extérieures sont relevées en position de transport. En sus, dans la position de transport et/ou de remisage le centre de gravité de la machine reste assez élevé. Ceci nuit à la stabilité de la machine notamment lorsqu'elle est détachée du tracteur et déposée au sol, et empêche pratiquement la réalisation de machines avec plus que quatre roues râteleuses.

La demande de brevet DE-A-1782632 se rapporte à une machine à quatre roues râteleuses supportées par un châssis qui est réalisé en deux parties articulées entre elles à travers une pièce intermédiaire. Pour le transport, l'une de ces parties peut être basculée au-dessus de l'autre, autour des articulations de la pièce intermédiaire. Ce déplacement doit être effectué manuellement par un opérateur, ce qui demande un important effort. De plus, le risque encouru par l'opérateur est considérable en raison de la taille des roues râteleuses et de la présence de fourches sur ces dernières.

La demande de brevet EP-A-288416 (document appartenant à l'état de la technique défini selon l'article 54(3) de la CBE, pour les états contractants désignés AT, DE, FR et NL) se rapporte à une machine à quatre roues râteleuses supportées par un châssis comportant une partie centrale et deux parties latérales. Chacune de ces parties latérales est relevable par rapport à la partie centrale et, comporte une articulation pour basculer la roue râteleuse qu'elle porte, au-dessus de la partie centrale. Ce déplacement nécessite des vérins hydrauliques pour le relevage et des bielles spécifiques pour ledit basculement. Ces différents moyens compliquent la machine et provoquent un renchérissement de cette dernière.

Le problème général à résoudre par l'objet de la présente demande est de réaliser une machine sur laquelle l'encombrement et le risque encouru par le voisinage durant le transport et le remisage peuvent être réduits en toute sécurité, tout en étant à la fois simple, peu onéreuse et stable.

Selon la présente invention, ce problème est résolu en ce que l'axe de rotation de l'articulation est sensiblement parallèle à l'axe de pivotement du pivot et sensiblement perpendiculaire à l'axe longitudinal de la partie latérale, et que chaque dispositif de manoeuvre pour déplacer les parties latérales du châssis est fixé à la partie centrale du châssis et à la portion de ladite partie latérale qui est située au-delà de l'articulation autour de laquelle bascule la ou les roues râteleuses latérales, c'est-à-dire entre cette articulation et la roue râteleuse latérale qui est la plus proche du pivot de chaque partie latérale sur la partie centrale du châssis ou sur cette roue râteleuse latérale, ou encore au-delà de cette roue râteleuse latérale. De cette manière, le dispositif de manoeuvre engendre directement le basculement et le repliement de la ou des roues râteleuses latérales lorsque la partie latérale correspondante du châssis est déplacée en hauteur par rapport à la partie centrale du châssis.

L'invention sera mieux comprise grâce à la description ci-après, qui se rapporte à différents modes de réalisation, donnés à titre d'exemples non limitatifs, et expliqués avec référence aux dessins schématiques annexés, dans lesquels :

— la figure 1 est une vue partielle de face de la machine conforme à un premier mode de réalisation de l'invention et pourvue de quatre roues râteleuses, en position de travail ;

— la figure 2 est une vue partielle de dessus, à plus grande échelle, de la machine conforme à l'invention ;

— la figure 3 est une vue partielle de face de la machine, en position de transport ou de remisage ;

— la figure 4 est une vue partielle de face, à plus grande échelle, du dispositif de verrouillage de la machine en position de travail ;

— la figure 5 est une vue partielle de face, à plus grande échelle, du dispositif de verrouillage de la machine en position de transport et de remisage;

— la figure 6 est une vue partielle de face, à plus grande échelle, d'une variante du dispositif de verrouillage de la machine, en position de travail et à l'état verrouillé ;

— la figure 7 est une vue partielle de face, à plus grande échelle, du dispositif de verrouillage représenté à la figure 6, en position de travail et à l'état déverrouillé ;

— la figure 8 est une vue partielle de face d'une variante de réalisation de la machine, en position de travail ;

— la figure 9 est une vue partielle de face de la machine représentée à la figure 8, en position de transport ou de remisage ;

— la figure 10 est une vue partielle de face, à plus grande échelle, du dispositif de verrouillage de la machine représentée à la figure 8, en position de travail ;

— la figure 11 est une vue partielle de face, à plus grande échelle, du dispositif de verrouillage de la machine en position de transport ou de remisage;

— la figure 12 est une vue partielle de face de la machine conforme à un second mode de réalisation de l'invention et pourvue de six roues râteleuses, en position de travail ;

— la figure 13 est une vue partielle de face de la machine représentée à la figure 12, en position de transport ou de remisage ;

— la figure 14 est une vue partielle de face d'une variante de réalisation de la machine en position de travail ;

— la figure 15 est une vue partielle de face de la machine représenté à la figure 14, en position de transport ou de remisage, et

— la figure 16 est une vue partielle de face de la machine représentée à la figure 12, et munie d'un dispositif de débrayage automatique.

Conformément à l'invention, le châssis (2) se compose d'une partie centrale (9) et de deux parties latérales (1) reliées aux extrémités de ladite partie centrale au moyen de pivots (4). Chacune des deux parties latérales (1) du châssis (2) comporte une articulation (3) située entre le pivot (4), autour duquel peut être déplacée la partie latérale (1) par rapport à la partie centrale (9), et l'axe de rotation (5Z) de la roue râteleuse (5) qui se trouve sur la partie latérale (1) et qui est la plus proche dudit pivot (4), de manière à permettre le basculement vers le bas de la ou des roues râteleuses (5) et/ou (6) fixées à cette partie latérale (1), lorsque celle-ci est déplacée en hauteur par rapport à la partie centrale (9) du châssis (2). L'axe de rotation (3Y) de l'articulation (3) est sensiblement parallèle à l'axe de pivotement (4Y) du pivot (4) et sensiblement perpendiculaire à l'axe longitudinal (1X) de la partie latérale (1), donc parallèle au sens d'avancement de la machine, l'articulation (3) étant située à proximité immédiate de l'axe de rotation (5Z) de la roue râteleuse (5).

Selon un premier mode de réalisation de l'invention, la machine est à quatre roues râteleuses, dont deux (7) sont fixées à la partie centrale (9) du châssis (2) et les deux autres (5) chacune sur l'une des deux parties latérales (1) du châssis (2), en l'occurence à l'extrémité de chaque partie latérale (1), l'ensemble étant symétrique par rapport à l'axe longitudinal de la machine.

Selon une première variante de l'invention, un dispositif de manoeuvre (10) pour le relevage de la partie latérale (1) est situé au-dessus de cette partie latérale (1) et est fixé à la partie centrale (9) et à la portion de ladite partie latérale (1) située au-delà de l'articulation (3), c'est-à-dire entre l'articulation (3) et la roue râteleuse (5) ou sur la roue râteleuse (5) elle-même, ou encore au-delà de cette roue râteleuse (5), de manière à engendrer directement le basculement et le repliement de la roue râteleuse (5) lorsque la partie latérale est déplacée en hauteur par pivotement autour du pivot (4).

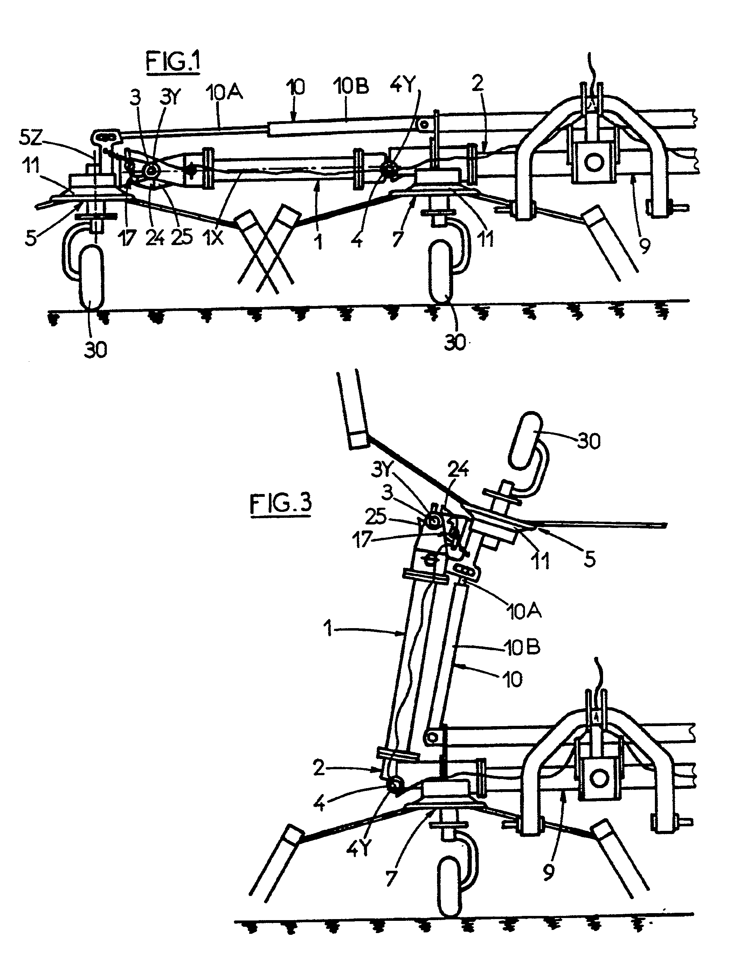

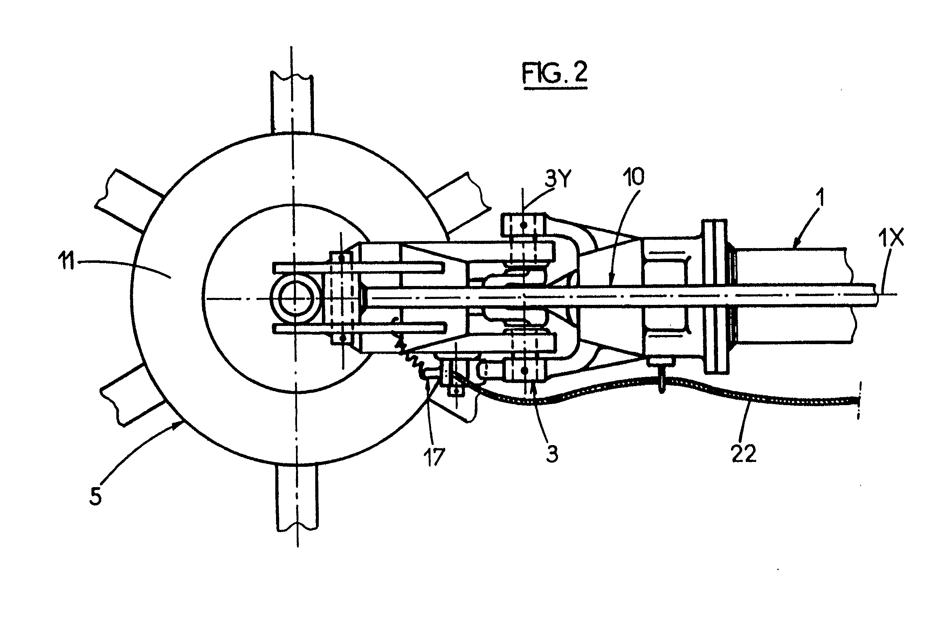

Comme le montre les figures 1 et 2 des dessins annexés, le dispositif de manoeuvre (10) est fixé avantageusement sur un couvercle situé au-dessus du moyeu (11) de la roue (5).

En outre, l'extrémité de la partie télescopique (10A) du dispositif de manoeuvre (10) est pourvue d'un ergot (26) coulissant dans un orifice oblong (27) de pattes solidaires de la partie latérale (1), de manière à pouvoir compenser les variations angulaires de la partie latérale (1) dues aux inégalités du sol.

En position de travail, le pivot (4) permet à la partie latérale (1) de suivre les inégalités du sol transmises par les roues (30) de la machine.

Au niveau de ce pivot (4) la partie centrale (9) et la partie latérale (1) du châssis (2) sont pourvues de butées dont la position permet un débattement angulaire de ladite partie latérale (1) d'environ 10° vers le bas. Ce débattement permet à la roue râteleuse (5) disposée à l'extrémité de la partie latérale (1) de se déplacer vers le bas par rapport à la partie centrale (9). Dans la position de travail l'articulation (3) est notamment bloquée grâce à deux butées (24, 25) disposées sous l'articulation (3) et grâce à un dispositif de verrouillage (17) sous la forme d'un crochet (18) pouvant pivoter autour d'un axe de rotation central (18Y), coopérant avec une butée (19) et étant relié à un ressort de rappel (20). Ce blocage est important afin que les roues râteleuses (5) des parties latérales (1) restent stables durant le travail. Il évite qu'elles basculent autour des articulations (3) à la fois lorsque la machine est déplacée sur le sol ou lorsqu'elle est momentanément soulevée par exemple en bout de terrain.

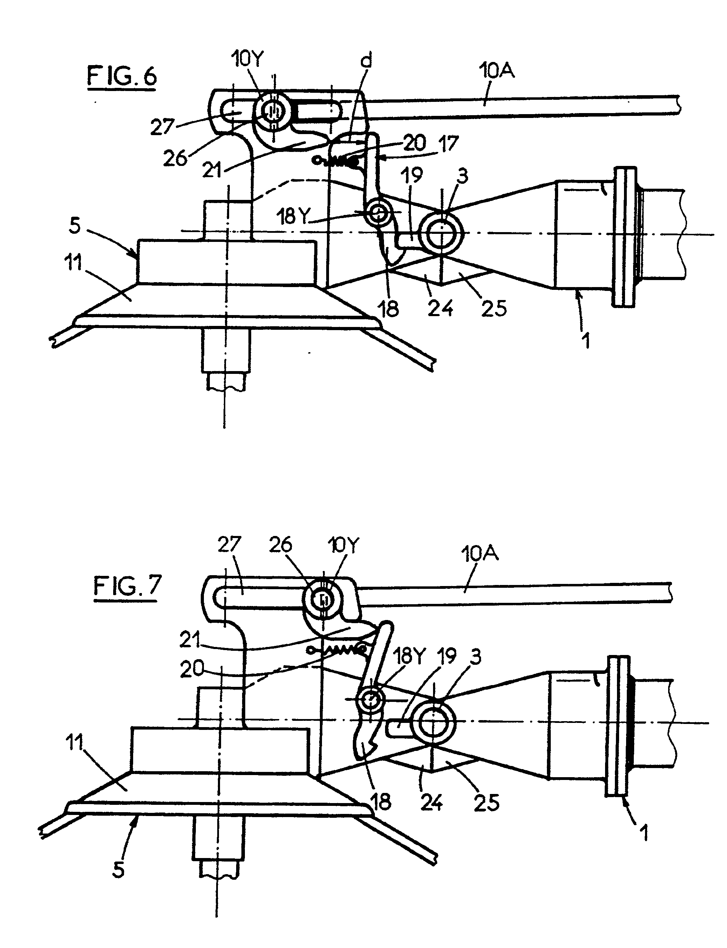

Selon une première variante de l'invention, l'élément de fixation (10Y) du dispositif de manoeuvre (10) est pourvu d'un ergot coudé (21) disposé de telle manière que lorsque la partie télescopique (10A) est en mouvement pour déplacer la partie latérale (1) en position de transport, il bute contre l'extrémité supérieure du crochet (18) et l'entraîne ainsi en rotation autour de l'axe (18Y), provoquant son déverrouillage automatique (voir figures 6 et 7).

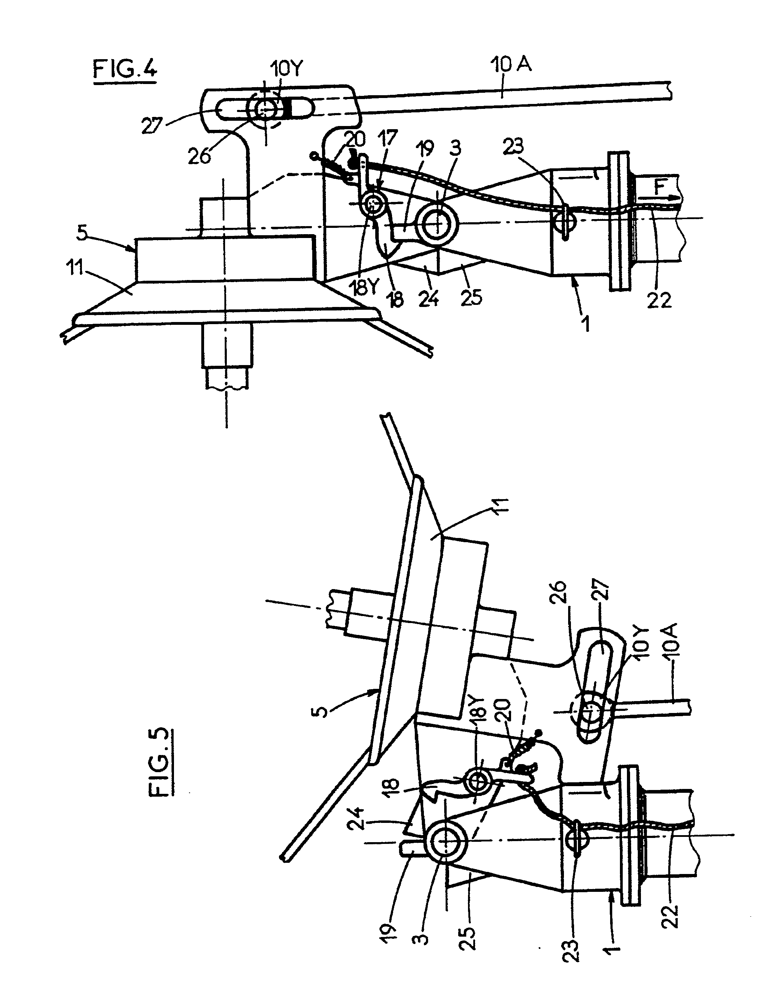

Selon une seconde variante de l'invention, l'extrémité supérieure du crochet (18) est reliée à un câble (22) guidé à travers un oeillet (23), de manière à permettre un déverrouillage manuel du crochet (18) (voir figures 4 et 5).

Le débattement angulaire de la roue râteleuse (5) en position de travail est compensé par l'orifice oblong (27) dont la longueur est calculée de manière à ce qu'elle n'entrave pas un débattement angulaire d'environ 10° vers le bas et vers le haut. Ainsi, la roue râteleuse (5) pourra suivre librement les inégalités du sol sans les transmettre au dispositif de manoeuvre (10). La machine de fenaison fonctionne, par conséquent, comme si l'articulation (3) n'existait pas.

Afin de mettre la machine en position de transport ou de remisage, on actionne le dispositif de manoeuvre (10) réalisé avantageusement sous la forme d'un vérin hydraulique pourvu de deux bras télescopiques (10A) et (10B), après avoir déverrouillé le dispositif (17) en actionnant le câble (22), par exemple, depuis le siège du conducteur, dans le sens indiqué par la flèche (F) (voir figure 4). Comme on l'a vu précédemment, ce déverrouillage peut également se faire automatiquement grâce à l'ergot coudé (21) disposé de telle sorte qu'avant qu'il n'arrive en bout de course dans l'orifice oblong (27), il bute contre l'extrémité supérieure du crochet (18) afin de le faire pivoter et d'entraîner ainsi le déverrouillage (voir figures 6 et 7). Ceci est possible lorsque l'orifice oblong (27) est prolongé de manière à permettre un déplacement de l'ergot (21) qui est supérieur à la distance (d) séparant l'extrémité de l'ergot (21) de l'extrémité supérieure du crochet (18) (figures 6 et 7). Il est à noter que l'ergot (21) ne pénètre dans ledit prolongement de l'orifice (27) que lorsqu'on actionne le dispositif de manoeuvre (10).

Une fois le dispositif (17) déverrouillé, le vérin (10) entraîne, dans un premier temps, le soulèvement de la roue râteleuse (5) qui bascule autour de l'articulation (3). Puis, la partie latérale (1) se replie autour du pivot (4). La machine en position de transport ou de remisage est représentée à la figure (3). La roue râteleuse (5) a ainsi basculé d'un angle d'environ 180° par rapport à sa position de travail et se retrouve sensiblement à l'envers. Dans cette position ses fourches sont dirigées vers le haut et non pas vers l'extérieur. De plus, par suite de son basculement autour de l'axe (3), cette roue râteleuse (5) se rapproche de la partie centrale (9) du châssis (2). Ainsi la hauteur de la machine est réduite pour le transport et le remisage. Il est à noter que cette roue râteleuse (5) reste maintenue dans cette position grâce au vérin (10).

Bien entendu, le basculement de l'autre roue râteleuse située sur l'autre partie latérale de la machine s'effectue simultanément et selon le même principe, si bien que les deux roues râteleuses sont repliées.

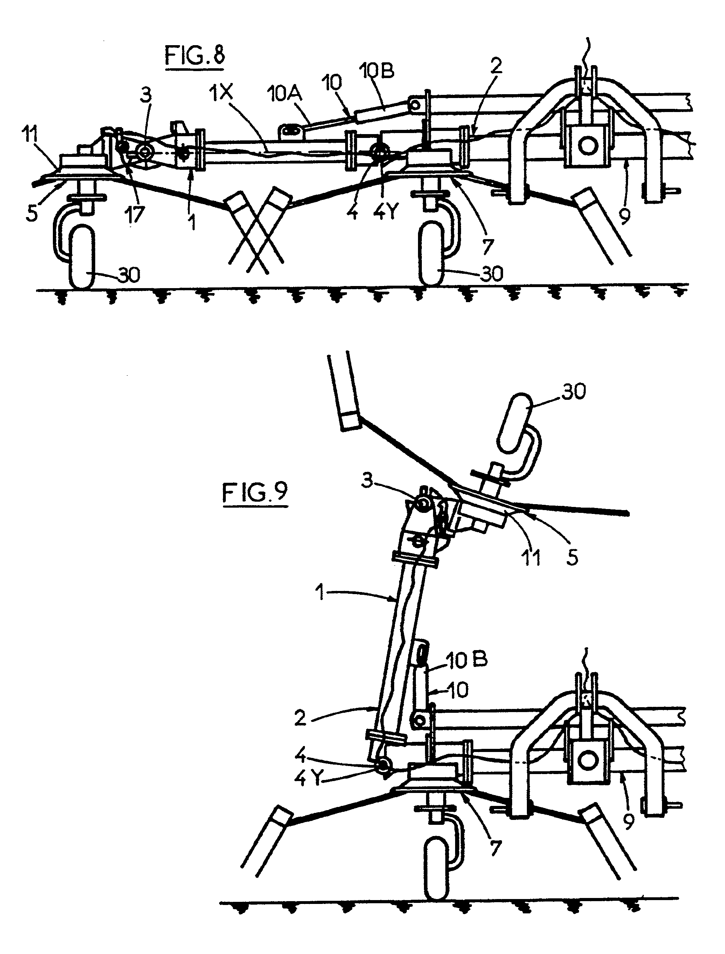

Selon une variante de réalisation de l'invention, et comme représenté aux figures 8 et 9, le dispositif de manoeuvre (10) est fixé à la portion de la partie latérale (1) située non pas au-delà de l'articulation (3), mais entre l'articulation (3) et le pivot (4) de manière à engendrer le basculement et le repliement vers le bas de la roue râteleuse (5) sous l'effet de son propre poids lorsque la partie latérale est déplacée en hauteur par pivotement autour du pivot (4).

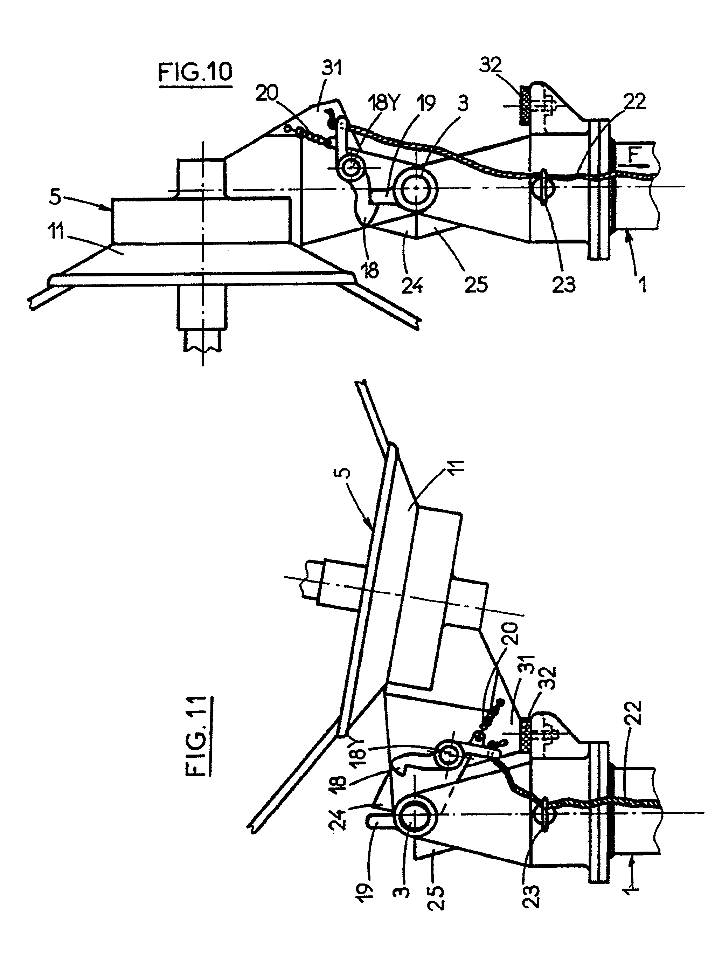

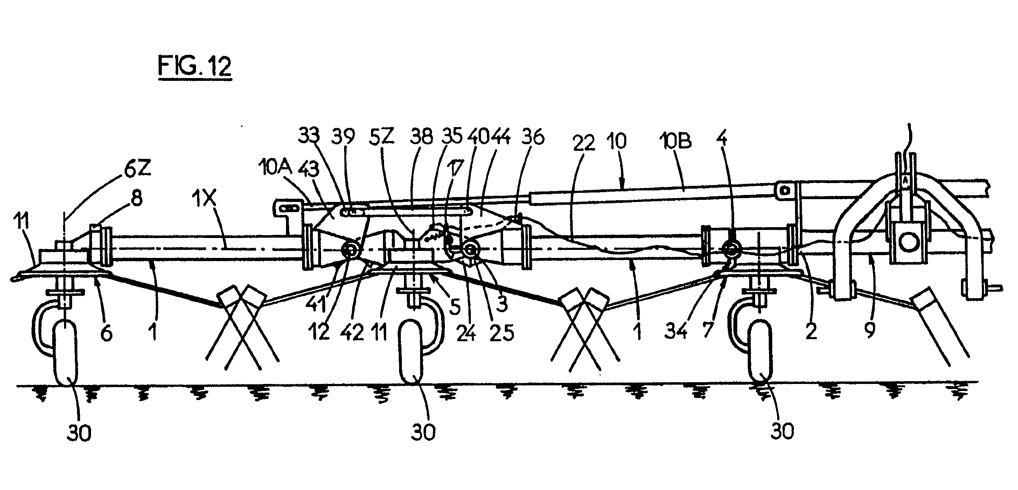

Conformément à cette variante, le déverrouillage de l'articulation (3) s'effectue manuellement par actionnement du câble (22) dans le sens indiqué par la flèche (F) (voir figures 10 et 11). Lorsque le vérin (10) est actionné, la partie latérale (1) pivote autour du pivot (4). Lorsqu'elle dépasse un angle de pivotement de 90°, la roue râteleuse (5) bascule vers le bas autour de l'articulation (3), sous l'effet de son propre poids, d'un angle supplémentaire d'environ 90° jusqu'à ce que deux butées (31 et 32) situées au-dessus de l'articulation (3) soient en contact l'une avec l'autre. Cette variante permet de diminuer la longueur du vérin (10).

Bien entendu, le basculement de l'autre roue râteleuse située sur l'autre partie latérale s'effectue de la même manière.

Selon un second mode de réalisation de l'invention, la machine est à six roues râteleuses dont deux (7) sont fixées à la partie centrale (9) du châssis (2), et les quatre autres par paires (5 et 6) respectivement sur chacune des deux parties latérales (1) du châssis (2), l'ensemble étant parfaitement symétrique par rapport à l'axe longitudinal de la machine. Dans ce cas chaque partie latérale (1) est réalisée en deux portions reliées entre elles par un pivot (12).

Selon une première variante de l'invention, et comme le montre la figure 12 des dessins annexés, le dispositif de manoeuvre (10) est situé au-dessus de la partie latérale (1) et est fixé à la partie centrale (9) et à la portion de ladite partie latérale (1) située au-delà du pivot (12) se trouvant entre l'articulation (3) et l'axe de rotation (6Z) de la roue râteleuse (6), c'est-à-dire entre le pivot (12) et la roue râteleuse (6) ou sur la roue râteleuse (6) elle-même, ou encore au-delà de cette roue râteleuse (6), de manière à engendrer directement le basculement et le repliement des roues râteleuses (5 et 6) lorsque la partie latérale (1) est déplacée en hauteur par pivotement autour du pivot (4).

En position de travail, les pivots (4 et 12) permettent à la partie latérale (1) de suivre les inégalités du sol transmises par les roues (30) de la machine. Au niveau du pivot (4) la partie centrale (9) et la partie latérale (1) du châssis (2) comportent en (34) des butées dont la position permet un débattement angulaire vers le bas d'environ 10°. De plus, deux tringles (38) disposées au-dessus de la roue râteleuse (5), limitent les débattements angulaires de la partie extérieure avec la roue râteleuse (6) autour du pivot (12). Ces tringles (38) sont articulées en (40) dans des pattes (44) solidaires de la partie (1) intermédiaire et en (39) dans des orifices oblongs (33) de pattes (43) solidaires de la partie (1) extérieure du châssis (2). Le débattement angulaire de ladite partie extérieure du châssis avec la roue râteleuse (6) est défini par les orifices oblongs (33). Pendant le travail, la valeur de l'angle de débattement autour du pivot (12) est d'environ 20° (10° dans chaque sens). Les deux articulations (39, 40) se situent sensiblement au-dessus du pivot (12) et de l'articulation (3).

Ladite articulation (3) est également verrouillée en position de travail grâce au dispositif (17) et totalement bloquée grâce aux deux butées (24, 25) disposées sous l'articulation (3).

Lorsqu'il s'agit de mettre la machine en position de transport ou de remisage, on déverrouille manuellement le dispositif (17) grâce au câble (22), puis on actionne le vérin (10). Ce dernier entraîne dans un premier temps le soulèvement de la roue râteleuse (6) qui bascule autour du pivot (12) jusqu'à ce que les tringles (38) arrivent en bout de course dans les orifices oblongs (33). Puis, dans un second temps, la roue râteleuse (5) pivote autour de l'articulation (3) jusqu'à ce que les deux butées (35 et 36) situées au-dessus de l'articulation (3) soient en contact.

Simultanément, les deux tringles (38) poussent la partie (1) extérieure avec la roue râteleuse (6) dans une rotation inverse autour du pivot (12), de manière à ce que la roue râteleuse (6) pivote jusqu'à ce que les deux butées (41 et 42) situées au-dessous du pivot (12) soient en contact. Enfin, la partie intermédiaire (1) pivote alors autour du pivot (4) d'un angle d'environ 90°.

La machine en position de transport ou de remisage est représentée à la figure (13). La roue râteleuse (6) se retrouve en position plus ou moins verticale, alors que la roue râteleuse (5) a effectué une rotation d'environ 180° par rapport à sa position de travail et se retrouve à l'envers. Le vérin (10) en bout de course maintient l'ensemble dans cette position.

Bien entendu, le basculement des deux autres roues râteleuses situées sur l'autre partie latérale de la machine s'est effectué simultanément et selon le même principe, si bien que les quatre roues râteleuses sont en position repliée. Dans cette position de transport ou de remisage, les deux roues râteleuses extérieures (6) de chaque partie latérale (1) se touchent éventuellement. C'est pourquoi, il peut être avantageux de pourvoir le couvercle du moyeu (11) de ces roues râteleuses d'un plot (8) de protection, permettant également une meilleure stabilisation de l'ensemble. Dans cette position les fourches des roues râteleuses (5 et 6) ne sont pas dangereuses, la hauteur de la machine est réduite et le centre de gravité abaissé, en raison du pivotement vers le bas de la roue râteleuse (5) autour de l'articulation (3).

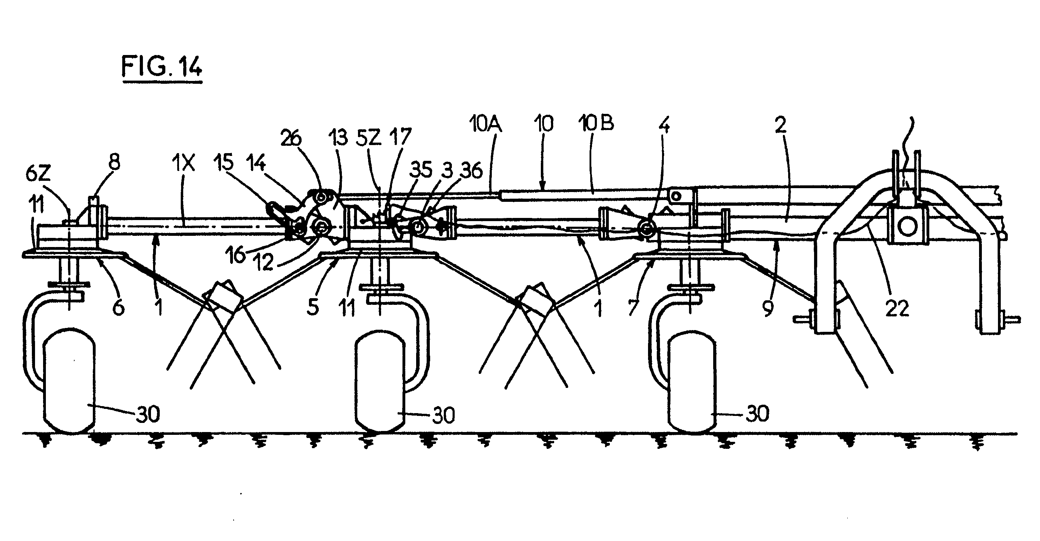

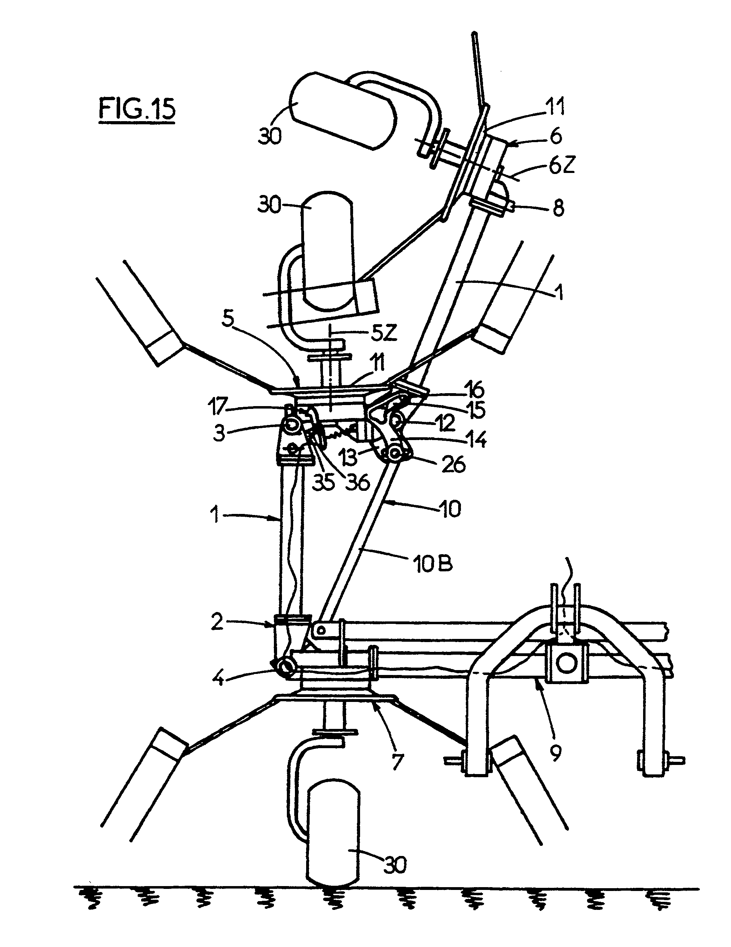

Selon une variante de réalisation de l'invention, et comme représenté aux figures 14 et 15, le dispositif de manoeuvre (10) est fixé à la portion de la partie latérale (1) située non pas au-delà du pivot (12), mais sur le couvercle du moyeu (11) de la roue (5).

Comme le montre plus particulièrement la figure 14, ledit couvercle du moyeu (11) de la roue (5) présente une partie latérale (13) munie d'une fente dans laquelle est guidé un ergot (26) du dispositif de manoeuvre (10). Une pièce coudée (14) est reliée à l'ergot (26) du dispositif de manoeuvre (10). Cette pièce (14) présente une fente (15) dans laquelle coulisse un ergot (16) fixé sur la partie (1) portant la roue râteleuse (6), à proximité du pivot (12).

Dans cette variante, lorsque le dispositif (17) est déverrouillé et que le vérin (10) est actionné, la pièce (14) est déplacée et entraîne l'ergot (16) dès qu'il est en contact avec l'extrémité inférieure de la fente (15) dans laquelle il coulisse. Puis, dans un premier temps, la roue râteleuse (5) bascule vers le haut autour de l'articulation (3) et la roue râteleuse (6) tourne autour du pivot (12). L'ergot (16) coulisse alors dans la fente (15) de la pièce coudée (14) jusqu'à être en butée à l'extrémité supérieure de ladite fente (15). Le pivotement autour du pivot (12) est alors bloqué, la roue râteleuse (6) ayant atteint sa position repliée. La roue râteleuse (5) continue alors à basculer autour de l'articulation (3) jusqu'à ce que les deux butées (35 et 36) situées au-dessus de l'articulation (3) entrent en contact. La partie latérale (1) pivote alors autour du pivot (4) d'un angle d'environ 90° et la machine atteint sa position de transport ou de remisage telle que représentée à la figure 15 des dessins annexés.

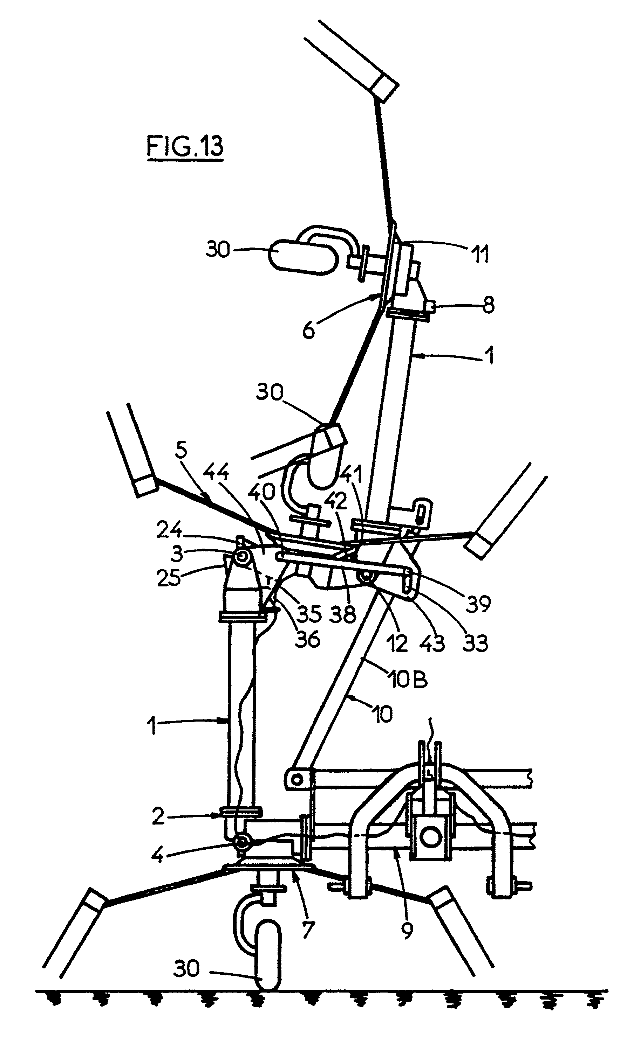

Les roues râteleuses (5 et 6) sont dans une position sensiblement identique à celle indiquée précédemment (voir figure 13).

Bien entendu, le basculement des deux autres roues râteleuses situées sur l'autre partie latérale de la machine s'est effectué simultanément et selon le même principe, si bien que les quatre roues râteleuses sont en position repliée, les deux roues râteleuses extérieures (6) étant éventuellement en contact par leurs plots (8) de protection et de stabilisation.

L'entraînement des roues râteleuses (5 et 6) est décalé par positionnement des pignons, de telle manière qu'elles ne se touchent pas en position repliée, leurs outils n'entrant jamais en contact les uns avec les autres, ni avec les roues (30) de la machine.

Conformément à une autre caractéristique de l'invention, la machine peut être pourvue d'un dispositif de débrayage automatique (28) d'une transmission électromagnétique prévue entre les moyens d'entraînement allant du tracteur à la machine. Ce dispositif assure le débrayage instantané de l'entraînement au moment du levage de la partie latérale (1) en vue du basculement des roues râteleuses (5 et/ou 6).

Le dispositif de débrayage (28) pourra être, par exemple, sous la forme d'un bouton poussoir (29) disposé sur la partie téléscopique (10B) du dispositif de contrôle (10), la partie téléscopique (10A) comportant une tige (37) qui, lorsque le dispositif de contrôle (10) est actionné, coulisse sur la partie téléscopique (10B) et entre en contact avec le bouton poussoir (29) qu'elle actionne, entraînant ainsi un débrayage instantané.

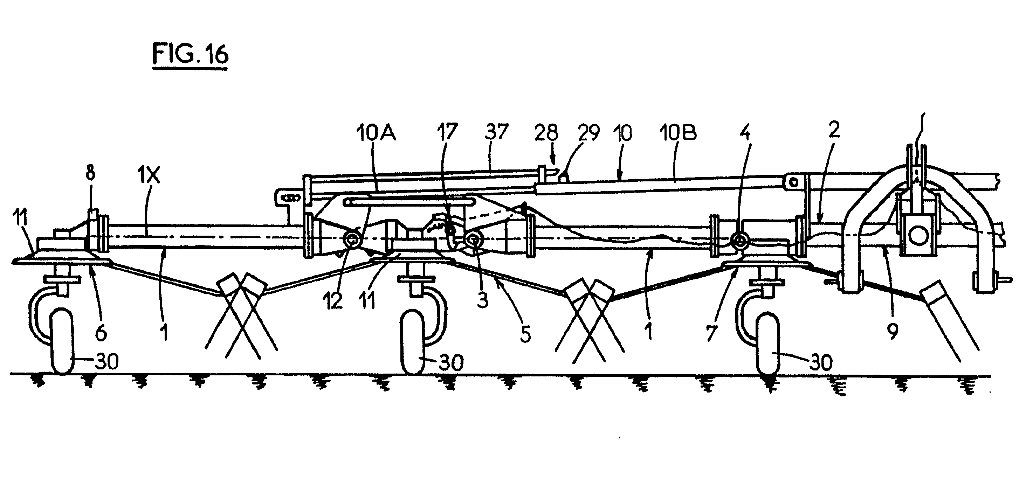

Ce dispositif de débrayage (28) peut être adapté à tous les types de machines décrites dans la présente invention. Il a été représenté, à titre d'exemple non limitatif, à la figure 16 des dessins annexés sur le type de machine à six roues râteleuses représenté à la figure 14.

La transmission sera, bien entendu, pourvue de différentes articulations, de préférence à cardans, disposées à la même hauteur que les différents pivots et articulations des parties latérales (1).

Ainsi, lorsque l'utilisateur actionne le vérin (10) avant d'avoir stoppé l'entraînement des roues râteleuses, ce dernier est débrayé automatiquement, ce qui évite sa détérioration.

Le fonctionnement de la machine, objet de l'invention a été décrit, pour chaque mode de réalisation et chaque variante, en vue du passage de la position de travail à la position de transport ou de remisage. Il est évident que pour le passage de la position de transport ou de remisage à la position de travail, les différentes étapes sont identiques et s'effectuent selon l'ordre inverse de celui décrit précédemment.

Bien évidemment, l'invention n'est pas limitée aux modes de réalisation décrits et représentés aux dessins annexés. Des modifications restent possibles, notamment du point de vue de la constitution des divers éléments, ou par substitution d'équivalents techniques, sans sortir pour autant du domaine de protection de l'invention tel que défini par les revendications.

**Revendications**

1. Machine de fenaison comportant notamment un châssis support (2) de forme allongée qui porte plusieurs roues râteleuses (5, 6, 7) pouvant être entraînées en rotation durant le travail autour d'axes (5Z, 6Z) dirigés vers le haut, ledit châssis se composant d'une partie centrale (9) supportant des roues râteleuses centrales (7) et de deux parties latérales (1) supportant chacune au moins une roue râteleuse latérale (5, 6), lesdites parties latérales étant articulées à la partie centrale au moyen de pivots (4) sensiblement parallèles au sens d'avancement de la machine, autour desquels elles peuvent pivoter en vue de suivre les inégalités du sol et peuvent être déplacées au moyen de dispositifs de manoeuvre (10) en vue du transport ou du remisage, chacune de ces parties latérales (1) comportant une articulation (3) pour basculer la roue râteleuse latérale (5, 6), cette articulation (3) étant située entre le pivot (4) correspondant et l'axe de rotation (5Z) de la roue râteleuse latérale (5) qui est la plus proche dudit pivot (4), et des moyens de blocage (17, 24, 25) de chaque articulation (3) lorsque les roues râteleuses latérales (5, 6) sont dépliées en position de travail, caractérisée par le fait que l'axe de rotation (3Y) de l'articulation (3) est sensiblement parallèle à l'axe de pivotement (4Y) du pivot (4) et sensiblement perpendiculaire à l'axe longitudinal (1X) de la partie latérale (1), et que chaque dispositif de manoeuvre (10) est fixé à la partie centrale (9) et à la portion de la partie latérale (1) située au-delà de l'articulation (3), c'est-à-dire entre l'articulation (3) et la roue râteleuse latérale (5) qui est la plus proche du pivot (4) ou sur cette roue râteleuse latérale (5) elle-même, ou encore au-delà de cette roue râteleuse latérale (5).

2. Machine de fenaison selon la revendication 1, caractérisée en ce que chaque articulation (3) est située à proximité immédiate de l'axe de rotation (5Z) de la roue râteleuse latérale (5) qui est la plus proche du pivot (4).

3. Machine de fenaison selon la revendication 1, caractérisée en ce que chaque dispositif de manoeuvre (10) est fixé sur un couvercle situé au-dessus du moyeu (11) de la roue râteleuse latérale (5) qui est la plus proche du pivot.

4. Machine de fenaison selon l'une quelconque des revendications 1 à 2, à deux roues râteleuses centrales (7) fixées à la partie centrale (9) du châssis (2) et quatre roues râteleuses latérales (5, 6) fixées par paires respectivement sur chacune des deux parties latérales (1) qui sont réalisées en deux portions reliées entre elles par un pivot (12), machine caractérisée en ce que chaque dispositif de manoeuvre (10) est fixé à la partie centrale (9) et à la portion de l'une des parties latérales (1) qui est située au-delà du pivot (12) se trouvant entre l'articulation (3) et l'axe de rotation (6Z) de la roue râteleuse latérale (6) la plus éloignée du pivot (4).

5. Machine de fenaison selon la revendication 4, caractérisée en ce que le dispositif de manoeuvre (10) est fixé entre le pivot (12) et la roue râteleuse latérale (6) la plus éloignée du pivot (4), à proximité du pivot (12).

6. Machine de fenaison selon la revendication 4, caractérisée en ce que chaque dispositif de manoeuvre (10) est fixé à la partie centrale (9) et à un couvercle situé au-dessus du moyeu (11) de la roue râteleuse latérale (5) qui est la plus proche du pivot (4).

7. Machine de fenaison selon la revendication 6, caractérisée en ce que le couvercle du moyeu (11) de la roue râteleuse latérale (5) qui est la plus proche du pivot (4) présente une partie latérale (13) munie d'une fente dans laquelle est guidé un ergot (26) du dispositif de manoeuvre (10), lequel ergot est pourvu d'une pièce coudée (14) présentant une fente (15) dans laquelle coulisse un ergot (16) fixé sur la portion de la partie latérale (1) qui est située au-delà du pivot (12).

8. Machine de fenaison selon la revendication 5, caractérisée en ce que les deux portions de chaque partie latérale (1) du châssis (2) sont reliées entre elles au moyen d'une tringle (38).

9. Machine de fenaison selon la revendication 1, caractérisée en ce qu'elle comporte des dispositifs de verrouillage (17) pour le blocage des articulations (3), qui sont réalisés sous la forme d'un crochet (18) pouvant pivoter autour d'un axe de rotation central (18Y), coopérant avec une butée (19) et étant lié à un ressort de rappel (20).

10. Machine de fenaison selon la revendication 9, caractérisée en ce que l'extrémité supérieure du crochet (18) est reliée à un câble (22).

11. Machine de fenaison selon la revendication 9, caractérisée en ce que l'élément de fixation (10Y) du dispositif de manoeuvre (10) est pourvu d'un ergot coudé (21) disposé de telle manière que lorsque la partie télescopique (10A) est en mouvement, il bute contre l'extrémité supérieure du crochet (18) et l'entraîne ainsi en rotation autour de l'axe (18Y), provoquant son déverrouillage automatique.

12. Machine de fenaison selon la revendication 1, caractérisée en ce que les deux parties du châssis (2) qui se situent de part et d'autre de l'articulation (3) de chaque partie latérale (1) sont munies de butées (24, 25) disposées sous l'articulation (3).

13. Machine de fenaison selon l'une quelconque des revendications 1 à 12, caractérisée en ce que l'extrémité de la partie télescopique (10A) de chaque dispositif de manoeuvre (10) est pourvue d'un ergot (26) coulissant dans un orifice oblong (27) d'une patte solidaire de la partie latérale (1) correspondante.

14. Machine de fenaison selon l'une quelconque des revendications 1 à 13, caractérisées en ce qu'elle est pourvue d'un dispositif de débrayage automatique (28) d'une transmission électro-magnétique permettant le débrayage instantané de l'entraînement en rotation des roues râteleuses (5, 6, 7), au moment du levage des parties latérales (1) du châssis (2) pour le transport ou le remisage.

15. Machine de fenaison selon la revendication 14, caractérisée en ce que le dispositif de débrayage (28) est réalisé sous la forme d'un bouton poussoir (29) qui commande une transmission électromagnétique et qui est disposé sur la partie télescopique (10B) du dispositif de manoeuvre (10), la partie télescopique (10A) comportant une tige (37) qui, lorsque le dispositif de manoeuvre (10) est actionné, coulisse sur la partie télescopique (10B) et entre en contact avec le bouton poussoir (29) qu'elle actionne, entraînant ainsi un débrayage instantané.

16. Machine de fenaison selon l'une quelconque des revendications 1 à 15, caractérisée en ce que le couvercle du moyeu (11) de chaque roue râteleuse latérale (6) la plus éloignée du pivot (4) est avantageusement pourvu d'un plot (8) de protection et de stabilisation.

## Claims

1. Haymaking machine comprising especially an oblong support frame (2) carrying several raking wheels (5, 6, 7) which can be driven in rotation around upwardly directed axes (5Z, 6Z) during working operation, said frame being made up of a central part (9) supporting central raking wheels (7) and of two lateral parts (1) each supporting at least one lateral raking wheel (5, 6), said lateral parts being articulated on the central part by means of pivots (4) substantially parallel to the direction of advance of the machine, around which they can pivot in order to follow the unevenness of the soil and can be displaced by means of operating devices (10) for the transport or the storage, each of these lateral parts (1) being provided with an articulation (3) for folding the lateral raking wheel (5, 6), this articulation (3) being located between the corresponding pivot (4) and the axis of rotation (5Z) of the lateral raking wheel (5) located nearest said pivot (4), and means (17, 24, 25) for locking each articulation (3) when the lateral raking wheels (5, 6) are unfolded in the working position, characterized in that the axis of rotation (3Y) of the articulation (3) is substantially parallel to the pivoting axis (4Y) of the pivot (4) and substantially perpendicular to the longitudinal axis (1X) of the lateral part (1), and in that each operating device (10) is fastened to the central part (9) and to the section of the lateral part (1) located beyond the articulation (3), that is to say between the articulation (3) and the lateral raking wheel (5) nearest the pivot (4) or on the raking wheel (5) itself, or even further beyond this lateral raking wheel (5).

2. Haymaking machine according to Claim 1, characterized in that each articulation (3) is located in the immediate vicinity of the axis of rotation (5Z) of the lateral raking wheel (5) nearest the pivot (4).

3. Haymaking machine according to Claim 1, characterized in that each operating device (10) is fastened to the cover located above the hub (11) of the lateral raking wheel (5) nearest the pivot.

4. Haymaking machine according to any one of Claims 1 to 2, with two central raking wheels (7) fastened to the central part (9) of the frame (2) and four lateral raking wheels (5, 6) fastened in pairs respectively to each of the two lateral parts (1) made in two sections linked one to the other by means of a pivot (12), machine characterized in that each operating device (10) is fastened to the central part (9) and to the section of one of the lateral parts (1) located beyond the pivot (12) situated between the articulation (3) and the axis of rotation (6Z) of the lateral raking wheel (6) furthest from the pivot (4).

5. Haymaking machine according to Claim 4, characterized in that the operating device (10) is fastened between the pivot (12) and the lateral raking wheel (6) furthest from the pivot (4), in the vicinity of the pivot (12).

6. Haymaking machine according to Claim 4, characterized in that each operating device (10) is fastened to the central part (9) and to a cover located above the hub (11) of the lateral raking wheel (5) nearest the pivot (4).

7. Haymaking machine according to Claim 6, characterized in that the cover of the hub (11) of the lateral raking wheel (5) nearest the pivot (4) presents a lateral part (13) provided with a slot in which is guided a pin (26) of the operating device (10), said pin being provided with a curved part (14) having a slot (15) in which is sliding a pin (16) fastened on the section of the lateral part (1) located beyond the pivot (12).

8. Haymaking machine according to Claim 5, characterized in that the two sections of each lateral part (1) of the frame (2) are linked one to the other by means of a rod (38).

9. Haymaking machine according to Claim 1, characterized in that it is provided with locking devices (17) to lock the articulations (3), consisting of a hook (18) which can pivot around a central axis of rotation (18Y), cooperating with a stop (19) and being linked to a drawback spring (20).

10. Haymaking machine according to Claim 9, characterized in that the upper end of the hook (18) is linked to a cable (22).

11. Haymaking machine according to Claim 9, characterized in that the fixing element (10Y) of the operating device (10) is provided with a curved pin (21) disposed in such a way that, when the telescopic part (10A) is moving, it abuts against the upper end of the hook (18) and drives it in rotation around the axis (18Y), causing its automatic unlocking.

12. Haymaking machine according to Claim 1, characterized in that the two parts of the frame (2) located on either side of the articulation (3) of each lateral part (1) are provided with stops (24, 25) disposed under the articulation (3).

13. Haymaking machine according to any one of Claims 1 to 12, characterized in that the end of the telescopic part (10A) of each operating device (10) is provided with a pin (26) sliding in an oblong opening (27) of a flap integral with the corresponding lateral part (1).

14. Haymaking machine according to any one of Claims 1 to 13, characterized in that it is provided with an automatic releasing device (28) of an electromagnetic transmission system allowing the instantaneous release of the driving in rotation of the raking wheels (5, 6, 7) when lifting the lateral parts (1) of the frame (2) for the transport or the storage.

15. Haymaking machine according to Claim 14, characterized in that the releasing device (28) is a push button (29) which controls an electromagnetic transmission system and which is located on the telescopic part (10B) of the operating device (10), the telescopic part (10A) being provided with a rod (37) which slides on the telescopic part (10B) and gets in touch with the push button (29) to occur an instantaneous release when the operating device (10) is actuated.

16. Haymaking machine according to any one of Claims 1 to 15, characterized in that the cover of the hub (11) of each lateral raking wheel (6) furthest from the pivot (4) is advantageously provided with a protecting and stabilizing stud (8).

## Patentansprüche

1. Heuwerbungsmaschine, die insbesonders einen Stützrahmen (2) mit langgestreckter Form aufweist, der mehrere Rechräder (5, 6, 7) trägt, die im Betrieb um aufrechtstehende Achsen (5Z, 6Z) in Drehung versetzt werden können, welcher Rahmen sich aus einem Mittelteil (9), der zentrale Rechräder (7) trägt, und zwei Seitenteilen (1), die jeweils zumindest ein seitliches Rechrad (5, 6) tragen, zusammensetzt, wobei die Seitenteile an dem Mittelteil mittels zur Fortbewegungsrichtung der Maschine im wesentlichen parallelen Schwenkzapfen (4) angelenkt sind, um welche sie schwenken können, um Bodenunebenheiten zu folgen, und um welche sie mittels Betätigungseinrichtungen (10) für den Transport oder die Unterstellung versetzt werden können, wobei jeder dieser Seitenteile (1) ein Gelenk (3) zum Kippen des seitlichen Rechrades (5, 6), welches Gelenk (3) sich zwischen dem entsprechenden Schwenkzapfen (4) und der Drehachse (5Z) des seitlichen Rechrades (5) befindet, das dem Schwenkzapfen (4) am nächsten ist, und Verriegelungselemente (17, 24, 25) für jedes Gelenk (3), wenn die seitlichen Rechräder (5, 6) in Betriebsstellung nach aussen geklappt sind, aufweist, dadurch gekennzeichnet, dass die Drehachse (3Y) des Gelenks (3) im wesentlichen parallel zur Schwenkachse (4Y) des Zapfens (4) und im wesentlichen normal zur Längsachse (1x) des Seitenteils (1) ist und dass jede Betätigungseinrichtung (10) am Mittelteil (9) und an dem Teil des Seitenteils (1) fixiert ist, der sich jenseits des Gelenks (3) befindet, d.h. zwischen Gelenk (3) und dem seitlichen Rechrad (5), das dem Schwenkzapfen (4) am nächsten ist, oder auf diesem seitlichen Rechrad (5) selbst oder auch jenseits dieses seitlichen Rechrades (5).

2. Heuwerbungsmaschine nach Anspruch 1, dadurch gekennzeichnet, dass jedes Gelenk (3) in unmittelbarer Nähe der Drehachse (5Z) des seitlichen Rechrades (5) angeordnet ist, das dem Schwenkzapfen (4) am nächsten ist.

3. Heuwerbungsmaschine nach Anspruch 1, dadurch gekennzeichnet, dass jede Betätigungseinrichtung (10) auf einer Abdeckung befestigt ist, die sich oberhalb der Nabe (11) des seitlichen Rechrades (5) befindet, das dem Schwenkzapfen am nächsten ist.

4. Heuwerbungsmaschine nach einem der Ansprüche 1 bis 2 mit zwei zentralen Rechrädern (7), die am Mittelteil (9) des Rahmens (2) befestigt sind, und vier seitlichen Rechrädern (5, 6), die paarweise an jeweils einem der beiden in zwei miteinander durch einen Schwenkzapfen (12) verbundenen Teilen ausgeführten Seitenteile (1) befestigt sind, dadurch gekennzeichnet, dass jede Betätigungseinrichtung (10) am Mittelteil (9) und an dem Teil des einen Seitenteils (1), der sich jenseits des zwischen Gelenk (3) und Drehachse (6Z) des vom Schwenkzapfen (4) am weitesten entfernten seitlichen Rechrades (6) befindlichen Schwenkzapfens (12) befindet, befestigt ist.

5. Heuwerbungsmaschine nach Anspruch 4, dadurch gekennzeichnet, dass die Betätigungseinrichtung (10) zwischen dem Schwenkzapfen (12) und dem vom Schwenkzapfen (4) am weitesten entfernten seitlichen Rechrad (6) in der Nähe des Schwenkzapfens (12) befestigt ist.

6. Heuwerbungsmaschine nach Anspruch 4, dadurch gekennzeichnet, dass jede Betätigungseinrichtung (10) am Mittelteil (9) und an einer Abdeckung befestigt ist, die sich oberhalb der Nabe (11) des seitlichen Rechrades (5) befindet, das dem Schwenkzapfen (4) am nächsten ist.

7. Heuwerbungsmaschine nach Anspruch 6, dadurch gekennzeichnet, dass die Abdeckung der Nabe (11) des seitlichen Rechrades (5), das dem Schwenkzapfen (4) am nächsten ist, einen Seitenteil (13) aufweist, der mit einem Schlitz versehen ist, in welchem ein Fortsatz (26) der Betätigungseinrichtung (10) geführt ist, welcher Fortsatz mit einem Winkelstück (14) versehen ist, das einen Schlitz (15) aufweist, in welchem ein auf dem Teil des Seitenteils (1), der sich jenseits des Schwenkzapfens (12) befindet, befestigter Fortsatz (16) gleitet.

8. Heuwerbungsmaschine nach Anspruch 5, dadurch gekennzeichnet, dass die beiden Teile jedes Seitenteils (1) des Rahmens (2) durch eine Stange (38) miteinander verbunden sind.

9. Heuwerbungsmaschine nach Anspruch 1, dadurch gekennzeichnet, dass sie Verriegelungseinrichtungen (17) zum Blockieren der Gelenke (3) aufweist, die in Form eines Hakens (18) ausgebildet sind, der um eine zentrale Drehachse (18Y) schwenken kann, mit einem Anschlag (19) zusammenwirkt und mit einer Rückholfeder (20) verbunden ist.

10. Heuwerbungsmaschine nach Anspruch 9, dadurch gekennzeichnet, dass das obere Ende des Hakens (18) mit einem Seil (22) verbunden ist.

11. Heuwerbungsmaschine nach Anspruch 9, dadurch gekennzeichnet, dass das Befestigungselement (10Y) der Betätigungseinrichtung (10) mit einem abgewinkelten Fortsatz (21) versehen ist, der derart angeordnet ist, dass er, wenn der Teleskopteil (10A) in Bewegung ist, gegen das obere Ende des Hakens (18) anschlägt und ihn so in Drehung um die Achse (18Y) versetzt, sodass er seine automatische Entriegelung bewirkt.

12. Heuwerbungsmaschine nach Anspruch 1, dadurch gekennzeichnet, dass die beiden Teilen des Rahmens (2), die sich zu beiden Seiten des Gelenks (3) jedes Seitenteils (1) befinden, mit Anschlägen (24, 25) versehen sind, die unter dem Gelenk (3) angeordnet sind.

13. Heuwerbungsmaschine nach irgend einem der Ansprüche 1 bis 12, dadurch gekennzeichnet, dass das Ende des Teleskopteils (10A) jeder Betätigungseinrichtung (10) mit einem Fortsatz (26) versehen ist, der in einem Langloch (27) eines am entsprechenden Seitenteil (1) befestigten Ansatzstücks gleitet.

14. Heuwerbungsmaschine nach irgend einem der Ansprüche 1 bis 13, dadurch gekennzeichnet, dass sie mit einer Einrichtung (28) zum automatischen Ausschalten einer elektromagnetischen Transmission versehen ist, die das sofortige Abschalten des Drehantriebs der Rechräder (5, 6, 7) in dem Augenblick ermöglicht, wenn Seitenteile (1) des Rahmens (2) für den Transport oder das Unterstellen angehoben werden.

15. Heuwerbungsmaschine nach Anspruch 14, dadurch gekennzeichnet, dass die Ausschalteinrichtung (28) in Form eines Druckschalters (29) verwirklicht ist, der eine elektromagnetische Transmission steuert und der auf dem Teleskopteil (10B) der Betätigungseinrichtung (10) angeordnet ist, wobei der Teleskopteil (10A) eine Stange (37) aufweist, die auf den Teleskopteil (10B) gleitet, wenn die Betätigungseinrichtung (10) betätigt wird, und in Kontakt mit dem Druckknopf (29) gelangt, den sie betätigt, sodass eine sofortige Abschaltung bewirkt wird.

16. Heuwerbungsmaschine nach irgend einem der Ansprüche 1 bis 15, dadurch gekennzeichnet, dass die Abdeckung der Nabe (11) jedes von dem Schwenkzapfen (4) am weitesten entfernten seitlichen Rechrades (6) vorteilhafterweise mit einem Schutz- und Stabilisationsstück (8) versehen ist.

FIG.1

FIG.3

FIG. 2

EP 0 300 937 B1

FIG.4

FIG.5

FIG. 6

FIG. 7

FIG. 8

FIG. 9

FIG.10

FIG. 11

FIG.12

## FIG.13

FIG.14

EP 0 300 937 B1

# FIG.15

FIG.16